# EUROPÄISCHE PATENTSCHRIFT

(11) **EP 2 746 483 B1**
(45) Veröffentlichungstag und Bekanntmachung des Hinweises auf die Patenterteilung: **18.11.2015**
(21) Anmeldenummer: 12008532.9
(22) Anmeldetag: 21.12.2012
(51) Int. Cl.: E04B 1/98, F16F 7/104, F03D 11/00, E04H 9/02

(54) **Schwingungstilgeranordnurg**
Oscillation damping assembly
Dispositif d'amortisseur d'oscillations

(43) Veröffentlichungstag der Anmeldung: 25.06.2014
(73) Patentinhaber: Wölfel Beratende Ingenieure GmbH & Co. KG, 97204 Höchberg (DE)
(72) Erfinder: Engelhardt, Jürgen, 97249 Eisingen (DE); Katz, Sebastian, 97082 Würzburg (DE)
(74) Vertreter: Knoblauch, Andreas

(56) Entgegenhaltungen:
- JP-A- H1 151 111
- JP-A- H08 200 438
- JP-A- H10 227 331
- JP-A- 2000 002 017
- JP-A- 2008 190 645
- JP-A- 2008 249 122

## Beschreibung

Die Erfindung betrifft eine Schwingungstilgeranordnung, insbesondere für hohe, schlanke Bauwerke, mit einer Tilgermasse, die einen Massenschwerpunkt aufweist und über eine Rad-Schiene-Anordnung an einer Basis abgestützt ist, wobei die Tilgermasse auf der Rad-Schiene-Anordnung aus einer Mittellage heraus verlagerbar ist und außerhalb der Mittellage Rückstellkräfte auf die Tilgermasse wirken.

Die Erfindung wird im Folgenden anhand eines Turmes für eine Windenergieanlage beschrieben. Sie ist aber auch bei anderen hohen und schlanken Bauwerken anwendbar, z.B. bei Schornsteinen, Antennen, Hochhäusern, Türmen oder Offshore-Bauwerken, wie Transformator-Stationen. Unter einem "hohen, schlanken Bauwerk" soll ein Bauwerk verstanden werden, das ein Verhältnis zwischen Höhe und kleinster Breite von mindestens fünf aufweist.

In Windenergieanlagen ist der Durchmesser der Rotoren in den letzten Jahren stetig gewachsen. In gleicher Weise ist die Höhe der Türme der Windenergieanlagen gewachsen. Zum Einen aufgrund der größeren Rotoren und zum Anderen aufgrund der besseren Windverhältnisse in größeren Höhen. Aus Gründen der Materialkosten ist man jedoch bestrebt, die Türme möglichst schlank zu halten.

Der Turm einer Windenergieanlage wird zu Schwingungen angeregt, insbesondere durch Windkräfte, aber auch durch Betriebskräfte und bei Windenergieanlagen im Meer zusätzlich durch Wellenkräfte. Dabei verbiegt sich der Turm, was auf Dauer zu kritischen Zuständen führen kann. Relevant sind im Wesentlichen die beiden ersten Biege-Eigenformen des Turms samt Gondel und Rotor.

Eine Maßnahme zur Erhöhung der Dämpfung und damit zur Verminderung der Schwingungen des Turms ist die Verwendung von Schwingungstilgern. Um die Funktionsfähigkeit von derartigen Schwingungstilgern zu gewährleisten, müssen die einzelnen Parameter des Schwingungstilgers aufeinander und den jeweiligen Turm abgestimmt werden.

Eine Möglichkeit, einen Schwingungstilger auszubilden, ist die Verwendung eines Pendels, wie sie beispielsweise aus WO 2009/068599 A2 bekannt ist. Hier ist eine Windturbine mit einem Stahlturm dargestellt, in dem ein Pendel mit einer Tilgermasse aufgehängt ist.

Höhe, schlanke Bauwerke haben vielfach eine relativ niedrige Eigenfrequenz. Damit erfordert ein Pendel aber eine relativ große Länge. Ein Pendel mit großer Länge hat bauraumtechnische Nachteile, weil ein entsprechend großer Bauraum für die Schwingungsbewegung des Pendels bereitgestellt werden muss.

Eine Schwingungstilgeranordnung der eingangs genannten Art ist aus JP 08-200438 A bekannt. Hier ist eine Tilgermasse mit Rollen versehen, die auf einer konvex gekrümmten Schiene abgestützt sind. Wenn die Tilgermasse auf der Schiene verlagert wird, dann ändert sich auch ihre Höhenlage in Schwerkraftrichtung, so dass Rückstellkräfte auf die Tilgermasse wirken, die versuchen, die Tilgermasse wieder an den tiefsten Punkt der Schiene zu bewegen. Zur Änderung der Eigenfrequenz dieser Schwingungstilgeranordnung, was zur Feinabstimmung des Tilgers notwendig ist, ist es erforderlich, die Krümmung der Schiene zu verändern, was mit einem erheblichen Aufwand verbunden ist und vor Ort, also im eingebauten Zustand der Schwingungstilgeranordnung, in der Regel nicht geleistet werden kann.

Eine alternative Ausgestaltung einer derartigen Schwingungstilgeranordnung ist aus JP 02-841487 bekannt. Hier ist ebenfalls eine gekrümmte Schiene vorgesehen, wobei die Schiene auf Rollen abgestützt ist.

Der Erfindung liegt die Aufgabe zugrunde, bei einer derartigen Schwingungstilgeranordnung auf einfache Weise die Eigenfrequenz verändern zu können.

Diese Aufgabe wird bei einer Schwingungstilgeranordnung der eingangs genannten Art dadurch gelöst, dass die Rad-Schiene-Anordnung Rollen aufweist, die mit der Schiene zusammenwirken, wobei mindestens eine Rolle eine Wirbelstrombremsanordnung aufweist. Die Wirbelstrombremsanordnung erzeugt bei einer Drehbewegung der Rolle Wirbelströme, die ihrerseits wieder in Wärme umgesetzt werden. Die hierfür erforderliche Energie wird der Schwingungsbewegung entnommen, so dass die Schwingungsbewegung gedämpft wird.

Weiterhin sind Rückstellkräfte veränderbar. Zum Verändern der Rückstellkräfte können alternativ oder zusammen zwei Maßnahmen verwendet werden. Die Rad-Schiene-Anordnung kann eine gekrümmte Schiene aufweisen und die Rad-Schiene-Anordnung ist dann in Schwerkraftrichtung gegenüber dem Massenschwerpunkt verstellbar ausgebildet. Zum anderen kann die Basis eine Rückstelleinrichtung mit mehreren Rückstellelementen aufweisen, von denen mindestens eines lösbar mit der Tilgermasse verbindbar ist.

Mit dieser Ausgestaltung ist es möglich, praktisch ohne Änderung der Außenabmessung der Schwingungstilgeranordnung und ohne größere Umbaumaßnahmen die Eigenfrequenz zu verändern. Bei der gekrümmten Schiene ist die Tilgermasse mit mindestens zwei Rädern oder Rollen auf der Schiene abgestützt. Virtuelle Linien, von denen jede durch den Mittelpunkt einer Rolle und den Anlagepunkt der Rolle an der gekrümmten Schiene verläuft, schneiden sich in einem Punkt. Dieser Punkt ist der Aufhängepunkt für das virtuelle Pendel. Wenn man nun den Massenschwerpunkt der Tilgermasse in Schwerkraftrichtung verändert, dann verändert man den Abstand zwischen dem Massenschwerpunkt und dem Aufhängepunkt des virtuellen Pendels und damit auch die Eigenfrequenz. Bei der Verwendung der Rückstelleinrichtung lässt sich die Rückstellkraft einfach durch Inbetriebnahme oder Außerbetriebnahme eines Rückstellelements verändern, wobei jedes Rückstellelement danach strebt, die Tilgermasse in eine Neutralstellung zu bringen und die Neutralstellungen für alle Rückstellelemente gleich sind. Auch hier ist kein größerer Umbau erforderlich. Die Verwendung oder Nicht-Verwendung eines Rückstellelements kann erfolgen, ohne dass das entsprechende Rückstellelement an sich vollständig entfernt werden muss.

Vorzugsweise weist die Rad-Schiene-Anordnung in Schwerkraftrichtung verteilt mehrere Befestigungspositionen an der Tilgermasse und mehrere Befestigungspositionen an der Basis auf. Man kann dann die Rad-Schiene-Anordnung in Schwerkraftrichtung verschieben, ohne die Tilgermasse und die Basis gleichzeitig verlagern zu müssen. So kann man bei der Veränderung der Eigenfrequenz der Schwingungstilgeranordnung beispielsweise die Tilgermasse auf einer geeigneten Abstützung abstützen, die Rad-Schiene-Anordnung von der Tilgermasse und von der Basis lösen, die Rad-Schiene-Anordnung in Schwerkraftrichtung an eine andere Position verbringen und sie dort erneut mit der Tilgermasse und der Basis verbinden.

Hierbei ist bevorzugt, dass Befestigungspositionen an der Tilgermasse und Befestigungspositionen an der Basis einander zugeordnet sind. In diesem Fall sind praktisch keine Ausrichtbewegungen der Tilgermasse und der Basis relativ zueinander notwendig, wenn die Rad-Schiene-Anordnung verstellt worden ist.

Hierbei ist bevorzugt, dass die Rad-Schiene-Anordnung mit einem Wagen verbunden ist, der die Tilgermasse rahmenartig umgreift. Die Tilgermasse ist also in dem Wagen aufgenommen. Der Wagen kann dennoch in Schwerkraftrichtung relativ zur Tilgermasse verstellt werden.

Bevorzugterweise sind die Rückstellelemente jeweils als Federanordnung ausgebildet, wobei die Federanordnung in einer Neutralposition eine Befestigungseinrichtung aufweist, die wahlweise an der Basis oder an der Tilgermasse festlegbar ist. Die Neutralposition ist eine Position, in der ein Kräftegleichgewicht herrscht, wenn keine äußeren Kräfte auf das Rückstellelement wirken. So kann die Federanordnung beispielsweise zwei Federelemente aufweisen, von denen eines bei einer Pendelbewegung der Tilgermasse gespannt und eines komprimiert wird. Wenn man die Befestigungseinrichtung an der Tilgermasse festlegt, dann kann das entsprechende Rückstellelement auf die Tigermasse wirken. Wenn man das Rückstellelement von der Tilgermasse entkoppelt, beispielsweise durch Festlegen an der Basis, dann wirkt es nicht auf die Tilgermasse, stört aber auch nicht weiter, weil es an Bewegungen gehindert ist. Wenn man eine derartige Rückstelleinrichtung verwendet, dann kann die Schiene auch einen unendlich großen Krümmungsradius aufweisen, also gerade ausgebildet sein.

Hierbei ist bevorzugt, dass die Wirbelstrombremse eine Magnetanordnung und mindestens einen elektrischen Leiter aufweist, wobei die Magnetanordnung und der elektrische Leiter durch eine Drehung der Rolle relativ zueinander bewegbar sind. Die Magnetanordnung kann beispielsweise Permanentmagnete aufweisen. Wenn die Magnetanordnung und der elektrische Leiter relativ zueinander bewegt werden, dann werden in dem elektrischen Leiter Wechselströme induziert, die durch den Ohm'schen Widerstand des elektrischen Leiters in Wärme umgewandelt werden.

Hierbei ist bevorzugt, dass der elektrische Leiter als Leiterplatte ausgebildet ist. Die Leiterplatte kann beispielsweise als Kupferscheibe ausgebildet sein. In diesem Fall wird an die genaue räumliche Zuordnung der Magnetanordnung und des elektrischen Leiters nur eine geringe Anforderung gestellt.

Auch ist von Vorteil, wenn mindestens eine Rolle als lastaufnehmende Rolle und mindestens eine Rolle als Führungsrolle ausgebildet ist, die die Tilgermasse gegenüber der Schiene in eine Richtung quer zur Schwerkraftrichtung führt. Damit vermindert man das Risiko, dass bei unerwarteten Schwingungen oder Stößen in eine Richtung quer zur Bewegungsrichtung der Tilgermasse die Zuordnung zwischen der Tilgermasse und der Schiene der Rad-Schiene-Anordnung verloren geht. Eine Führungsrolle lässt eine seitliche Führung reibungsarm erfolgen. Die lastaufnehmende Rolle kann beispielsweise als Schwerlastrolle ausgebildet sein, die einige Tonnen Masse an der Schiene abstützen kann.

Auch ist von Vorteil, wenn mindestens eine Rolle durch einen Motor antreibbar ist. Man kann dann die Schwingungstilgeranordnung als aktiven Tilger betreiben. Der Motor kann über die Rolle die Tilgermasse so antreiben, dass Schwingungen vermindert werden.

Hierbei ist bevorzugt, dass der Motor mit einem Regler verbunden ist, der mit einer Sensoranordnung verbunden ist. Die Sensoranordnung kann beispielsweise Schwingungen des Bauwerks erfassen und an den Regler melden, der dann den Motor so ansteuern kann, dass die Schwingungen vermindert werden.

In einer besonders bevorzugten Ausgestaltung ist vorgesehen, dass die Rad-Schiene-Anordnung eine Relativbewegung zwischen der Tilgermasse und der Basis in eine erste Richtung ermöglicht und eine Zusatz-Rad-Schiene-Anordnung vorgesehen ist, die eine Relativbewegung zwischen der Rad-Schiene-Anordnung und der Tilgermasse in eine zweite Richtung ermöglicht, die einen vorbestimmten Winkel größer 0° mit der ersten Richtung einschließt, insbesondere einen Winkel von 90°. Damit wird eine Schwingungstilgeranordnung realisiert, die zwei Freiheitsgrade aufweist, d.h. man kann Schwingungen in zwei Richtungen senkrecht zur Schwerkraftrichtung dämpfen, im Allgemeinen sogar alle Schwingungen, die senkrecht zur Schwerkraftrichtung auftreten.

Die Erfindung wird im Folgenden anhand eines bevorzugten Ausführungsbeispiels in Verbindung mit der Zeichnung beschrieben. Hierin zeigen:
- Fig. 1: eine erste Ausführungsform einer Schwingungstilgeranordnung,
- Fig. 2: die Ausführungsform nach Fig. 1 mit einer niedrigeren Eigenfrequenz als in Fig. 1,
- Fig. 3: die Ausführungsform nach Fig. 1 mit einer höheren Eigenfrequenz als in Fig. 1,
- Fig. 4: eine alternative Ausgestaltung einer Schwingungstilgeranordnung,
- Fig. 5: ein Detail aus Fig. 4,
- Fig. 6: eine schematische Darstellung einer Wirbelstrombremsanordnung und
- Fig. 7: eine Schwingungstilgeranordnung mit zwei Freiheitsgraden.

Die Erfindung wird im Folgenden anhand von einzelnen Ausführungsbeispielen beschrieben. Die in Zusammenhang mit den Ausführungsbeispielen beschriebenen Merkmale können aber untereinander ohne weiteres kombiniert werden.

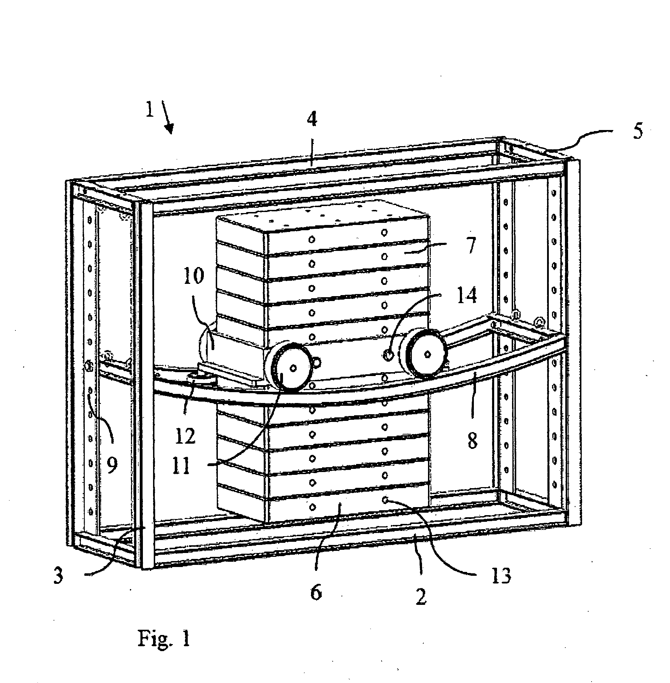

Fig. 1 zeigt eine erste Ausführungsform einer Schwingungstilgeranordnung 1 mit einer Basis 2, die als Rahmen ausgebildet ist und vier etwa in Schwerkraftrichtung verlaufende Ständer 3, vier Längstraversen 4, die jeweils zwei Ständer 3 miteinander verbinden, und vier Quertraversen 5 aufweist, die ebenfalls jeweils zwei Ständer miteinander verbinden, so dass die Basis 2 mit den Ständern 3, den Längstraversen 4 und den Quertraversen 5 einen Quader bildet.

Die Schwingungstilgeranordnung 1 weist ferner eine Tilgermasse 6 auf, die beispielsweise aus einer Vielzahl von einzelnen Massenelementen 7 zusammengesetzt sein kann. Die Verwendung von Massenelementen hat den Vorteil, dass diese einzeln transportiert und an Ort und Stelle verbracht und dort zusammengesetzt werden können.

Die Tilgermasse 6 weist einen nicht näher dargestellten Massenschwerpunkt auf, der sich beispielsweise in der Mitte der Tilgermasse 6 in Schwerkraftrichtung befindet.

In der Basis 2 sind zwei gekrümmte Schienen 8 befestigt. Die beiden Schienen 8 verlaufen parallel zueinander und weisen die gleiche Krümmung auf. Ihre konkave Seite ist in Schwerkraftrichtung nach oben gerichtet. Die Schienen 8 sind an den Ständern 3 der Basis 2 befestigt. Diese Befestigung ist allerdings lösbar. Die Schienen 8 können an den Ständer in Schwerkraftrichtung in unterschiedlichen Positionen festgelegt werden, wie ein Vergleich der Fig. 1 bis 3 zeigt. Die Enden der Schienen 8 werden jedoch in Schwerkraftrichtung immer in der gleichen Höhe positioniert.

Dargestellt ist, dass die Schienen 8 an diskreten Positionen an den Ständern 3 festgelegt werden können. Jede Position ist durch eine Bohrung 9 in einem Ständer 3 festgelegt. Es ist aber auch möglich, die Schienen 8 auf andere Weise an den Ständern 3 zu befestigen, so dass quasi eine stufenlose Positionierung in Schwerkraftrichtung möglich ist.

Die Tilgermasse 6 ist von einem rahmenartigen Wagen 10 umgeben. Der Rahmen kann, wie diese aus einem Vergleich der Fig. 1 bis 3 hervorgeht, in Schwerkraftrichtung entlang der Tilgermasse 6 verschoben werden und an der Tilgermasse 6 an verschiedenen Positionen festgelegt werden.

Am Wagen 10 sind lastaufnehmende Rollen 11 drehbar gelagert. Die lastaufnehmenden Rollen 11 können auch als "Schwerlastrollen" bezeichnet werden. Die Tilgermasse 6 kann durchaus eine Masse von mehreren Tonnen haben. Die lastaufnehmenden Rollen 11 müssen in der Lage sein, diese Last aufnehmen zu können.

Ferner weist der Wagen 10 auch noch mindestens eine Führungsrolle 12 auf, die den Wagen 10 quer zur Schwerkraftrichtung an einer Schiene 8 führt. Vorzugsweise ist aber für jede Schiene 8 eine entsprechende Führungsrolle 12 oder sogar ein Paar von Führungsrollen 12 vorgesehen.

Die Tilgermasse 6 weist zur Befestigung des Wagens 10 eine Vielzahl von Bohrungen 13 auf, die in Schwerkraftrichtung übereinander angeordnet sind. Der Wagen 10 kann mit Hilfe von nur schematisch dargestellten Stiften 14 mit der Tilgermasse 6 verbunden werden, indem jeweils ein Stift 14 in eine entsprechende Bohrung 13 eingesetzt wird.

Wenn die Tilgermasse 6 gegenüber der Basis2 verlagert wird, beispielsweise weil die Basis 2 in der Gondel einer Windkraftanlage angeordnet ist und die Gondel eine Schwingung durchführt, dann führt die Tilgermasse 6 eine Bewegung aus, die einer Pendelbewegung entspricht.

Wenn man bei jeder lastaufnehmenden Rolle 11 auf einer Seite der Tilgermasse, also auf den beiden lastaufnehmenden Rollen 11, die auf einer Schiene 8 rollen, eine Linie durch den Mittelpunkt und durch einen Auflagepunkt zwischen der lastaufnehmenden Rolle 11 und der Schiene 8 zieht, dann schneiden sich die beiden Linien in einem virtuellen Punkt. Um diesen virtuellen Punkt führt die Tilgermasse 6 eine Pendelbewegung aus. Die Länge des "virtuellen Pendels" wird bestimmt durch den Abstand zwischen diesem virtuellen Schnittpunkt und dem Massenschwerpunkt der Tilgermasse.

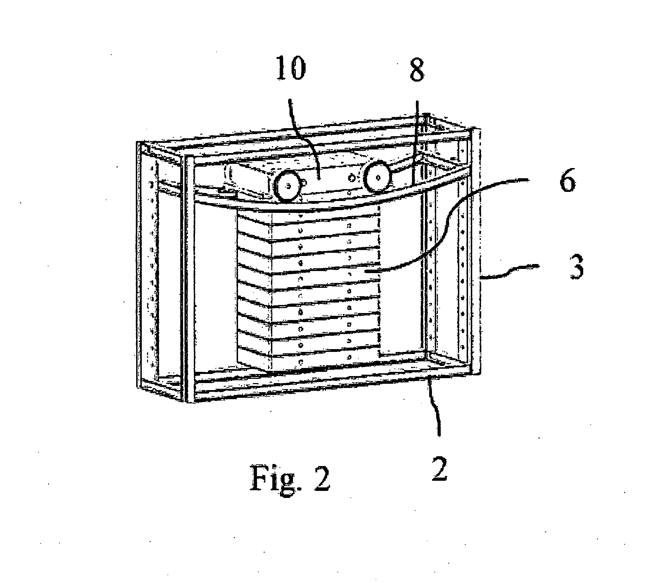

Da die Eigenfrequenz eines derartigen Pendels unter anderem von der Länge des Pendels abhängt, lässt sich die Eigenfrequenz dadurch verringern, dass man, wie in Fig. 2 dargestellt, die Schienen und den Wagen 10 in Schwerkraftrichtung weiter oben an der Basis 2, genauer gesagt an den Ständern 3 montiert, den Masseschwerpunkt der Tilgermasse 6 aber unverändert belässt. In diesem Fall wird nämlich die Pendellänge verkürzt, so dass sich die Eigenfrequenz vergrößert.

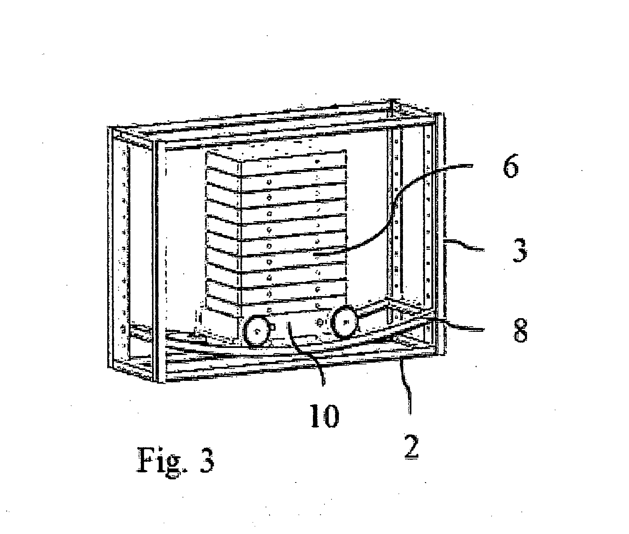

Umgekehrt kann man, wie in Fig. 3 dargestellt, die Schienen 8 in Schwerkraftrichtung an einer tieferen Position an den Ständern 3 der Basis 2 festlegen und gleichzeitig auch den Wagen 10 in einer in Schwerkraftrichtung tieferen Position an der Tilgermasse 6 festlegen, so dass sich eine etwas höhere Eigenfrequenz ergibt, weil die Pendellänge größer ist.

Wenn man eine feste Zuordnung zwischen den Befestigungspunkten des Wagens 10 an der Tilgermasse 6 und den Befestigungspunkten der Schienen 8 an den Ständern 3 hat, dann ist eine Veränderung der Eigenfrequenz ohne großen zusätzlichen Aufwand möglich. Es ist lediglich erforderlich, die Tilgermasse 6 soweit abzustützen, dass man die Verbindung zwischen dem Wagen 10 und der Tilgermasse 6 lösen kann. Sobald diese Verbindung gelöst ist, kann man die Schiene 8 in Schwerkraftrichtung verstellen und erneut an den Ständern 3 festlegen. In dieser Position der Schienen 8 in Schwerkraftrichtung kann dann der Wagen 10 wieder mit der Tilgermasse 6 verbunden werden, wie dies beispielsweise in den Fig. 2 und 3 dargestellt ist. Eine derartige Verstellung der Eigenfrequenz kann vor Ort erfolgen, also auch dann, wenn die Schwingungstilgeranordnung bereits in dem Turm oder in der Gondel einer Windkraftanlage eingebaut ist.

Anstelle einer Schiene 8 lässt sich natürlich auch eine andere Anordnung verwenden, bei der eine konkav gekrümmte Laufbahn für die lastaufnehmenden Rollen 8 vorgesehen ist, beispielsweise eine Platte oder dergleichen.

Der in Fig. 1 bis 3 dargestellte Aufbau der Schwingungstilgeranordnung 1 lässt sich in Schwingungsrichtung, also in Bewegungsrichtung der Tilgermasse 6 relativ schmal halten.

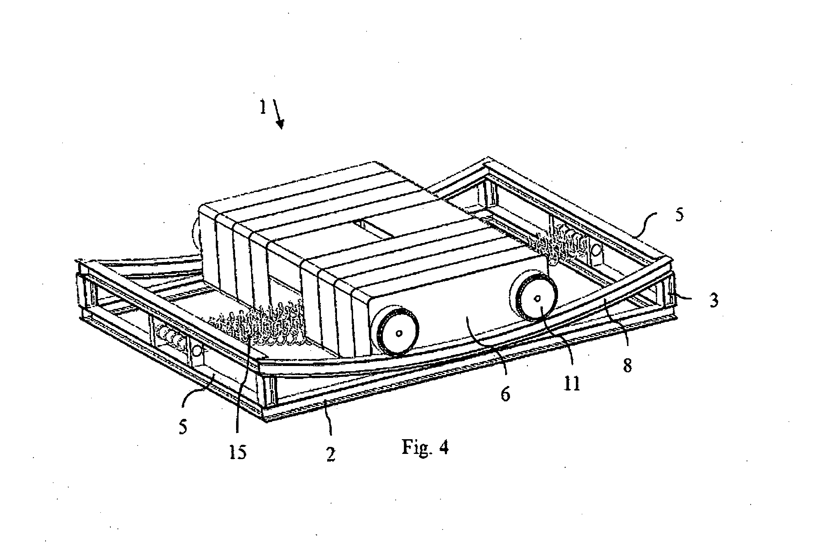

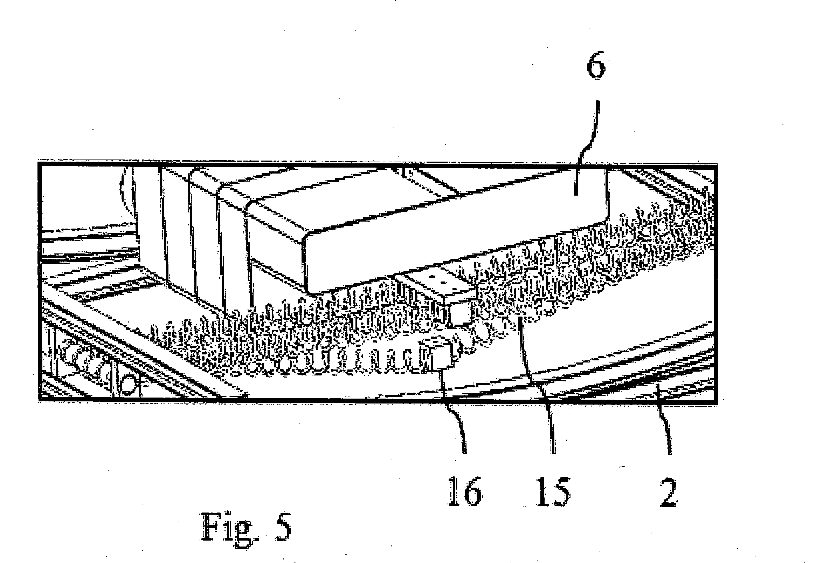

In den Fig. 4 und 5 ist eine Möglichkeit dargestellt, wie man eine Schwingungstilgeranordnung alternativ oder zusätzlich ausbilden kann.

Gleiche und funktionsgleiche Elemente sind hier mit den gleichen Bezugszeichen versehen.

Die Tilgermasse 6 ist wiederum über lastaufnehmende Rollen 11 auf den Schienen 8 abgestützt. Sie ist relativ flach, erfordert also nur eine geringe Bauhöhe.

In der Basis 2 sind mehrere diskrete Rückstellelemente 15 angeordnet. Jedes Rückstellelement 15 weist eine Befestigungseinrichtung 16 auf. Ferner ist jedes Rückstellelement 15 zwischen zwei Quertraversen 5 der Basis 2 angeordnet. Jedes Rückstellelement 15 kann bereits eine gewisse Vorspannung aufweisen. Die Befestigungseinrichtung 16 ist an einer Position angeordnet, in der ohne äußere Kräfte ein Kraftgleichgewicht herrscht. Wenn das Rückstellelement 15 beispielsweise aus zwei gleichen Federn gebildet ist, dann befindet sich das Befestigungselement 16 in der Mitte der Basis 2 in Bewegungsrichtung der Tilgermasse 6 zwischen den Federn.

Wie in Fig. 5 zu erkennen ist, lässt sich nun jedes der Rückstellelemente 15 einzeln mit der Tilgermasse 6 koppeln oder von dieser entkoppeln. Wenn das Rückstellelement mit der Tilgermasse 6 verbunden ist, dann wirkt es einer Bewegung der Tilgermasse 6 entgegen, weil die Federn des Rückstellelements 15 in eine Richtung komprimiert und in die andere Richtung gedehnt werden.

Alternativ dazu kann das Rückstellelement 15 mit seiner Befestigungseinrichtung 16 auch mit der Basis verbunden werden. In diesem Fall ist es zwar ebenfalls festgelegt, kann also keine unkontrollierten Bewegungen ausführen. Gleichzeitig wirkt es aber nicht mehr auf die Tilgermasse 6. Man verwendet also so viele Rückstellelemente 15, beispielsweise Federpaare, wie nötig sind, um die Eigenfrequenzbandbreite des Schwingungstilgers darstellen zu können. Diese Rückstellelemente sind in der Basis integriert und vorgespannt. Die zusätzliche Aktivierung erfolgt über eine Verbindung des jeweiligen Rückstellelements durch Befestigen der Befestigungseinrichtung 16 an der Tilgermasse 6. Dies hat den Vorteil, dass zur Abstimmung der Eigenfrequenz des Schwingungstilgers auf den Turm der Windkraftanlage keine Teile entfernt oder hinzugefügt werden müssen, die Frequenzabstimmung daher mit einfachen Mitteln bewerkstelligt werden kann.

Wenn man die gesamte Rückstellkraft durch Rückstelleinrichtungen 15 erzeugen kann, kann auch eine Schiene 8 mit unendlich großem Krümmungsradius verwendet werden, also eine ebene Schiene 8.

Selbstverständlich kann man die Ausgestaltungen nach den Fig. 1 bis 3 auch mit Rückstelleinrichtungen 15 kombinieren oder bei der Ausgestaltung nach Fig. 4 und 5 eine Verstellung des Massenschwerpunkts der Tilgermasse 6 gegenüber den Schienen 8 vornehmen, um zusätzliche Möglichkeiten zu der Einstellung der Eigenfrequenz zu gewinnen.

Im Ausführungsbeispiel der Fig. 5 sind beispielsweise vier Rückstellelemente 15 aktiviert und ein Rückstellelement 15 ist deaktiviert.

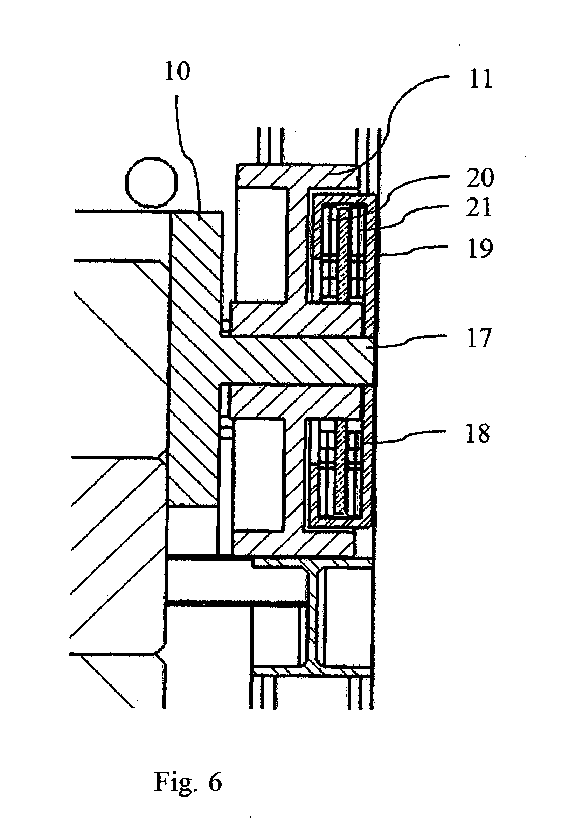

Fig. 6 zeigt eine Möglichkeit, wie man in die lastaufnehmende Rollen 11 noch eine Dämpfungsfunktion integrieren kann. Natürlich ist es auch bei einer Führungsrolle 12 möglich, eine Dämpfungsfunktion zu integrieren.

Die lastaufnehmende Rolle 11 ist an einem Wellenzapfen 17 des Wagens 10 drehbar gelagert. Ein Achslager, das in der Regel vorhanden sein wird, ist aus Gründen der Übersicht nicht dargestellt.

An der lastaufnehmenden Rolle 11 ist eine Kupferscheibe 18 befestigt, die sich bei einer Drehung der lastaufnehmenden Rolle 11 mit dreht. Eine Magnetbaugruppe 19 mit mehreren Permanentmagneten 20, 21, die beidseits der Kupferscheibe 18 angeordnet sind, sind undrehbar an dem Wellenzapfen 17 befestigt.

Wenn sich nun die lastaufnehmende Rolle 11 dreht, dann bewegt sich die Kupferscheibe 18 relativ zu den Permanentmagneten 20, 21. Die Permanentmagnete 20, 21 erzeugen ein Magnetfeld, das die Kupferscheibe 18 etwa senkrecht durchsetzt. Dies ist aber nicht unbedingt zwingend erforderlich. Wenn sich nun die Magnetscheibe 18 gegenüber den Permanentmagneten 20, 21 bewegt, werden elektrische Ströme in der Kupferscheibe 18 induziert. Da die Kupferscheibe 18 einen Ohm'schen Widerstand aufweist, erzeugen die Wirbelströme Wärme, die als Verlustleistung an die Umgebung abgegeben wird. Diese Verlustleistung wird der Schwingungsbewegung entzogen, die dadurch gedämpft wird.

In nicht näher dargestellter Weise kann man die lastaufnehmende Rolle 11 auch durch einen Motor antreiben lassen. Der Motor ist dabei vorzugsweise mit einem Regler verbunden, der seinerseits mit einem Sensor, beispielsweise einem Schwingungssensor, verbunden ist. Der Regler ist damit in der Lage, auf gemessene Schwingungen des Turmes zu reagieren und den Motor so anzutreiben, dass die Tilgermasse 6 so bewegt wird, dass die Schwingungen gedämpft werden.

Durch eine geringfügige Änderung der Anordnung nach Fig. 6 lässt sich auch die Wirbelstrombremse als Motor verwenden. Hier müssen im Grunde nur die Permanentmagnete 20, 21 durch elektrisch ansteuerbare Magnete ersetzt werden und die Kupferscheibe 18 muss in Umfangsrichtung elektrische Unterbrechungen aufweisen.

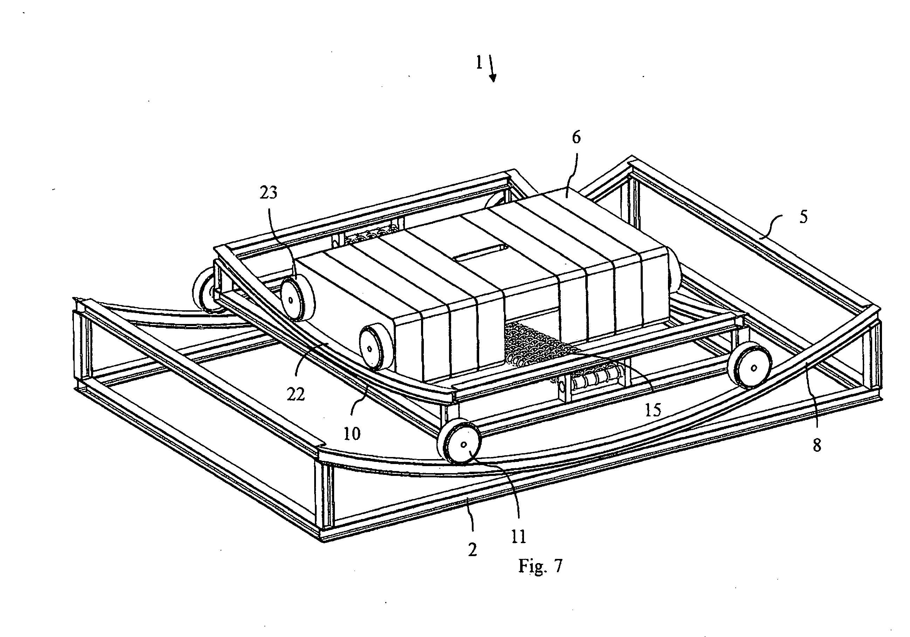

Fig. 7 zeigt eine weitere Ausgestaltung einer Schwingungstilgeranordnung, bei der gleiche und funktionsgleiche Elemente mit den gleichen Bezugszeichen wie in den Fig. 1 bis 6 bezeichnet werden.

Die Tilgermasse 6 ist in diesem Fall nicht direkt über lastaufnehmende Rollen 11 an den Schienen 8 abgestützt. Die Tilgermasse 6 ist vielmehr über eine Zusatz-Rad-Schiene-Anordnung auf den Schienen 8 abgestützt. Die Zusatz-Rad-Schiene-Anordnung weist Zusatzschienen 22 auf, die etwa im rechten Winkel zu den Schienen 8 verlaufen. Die Tilgermasse 6 ist über Zusatzrollen 23 auf den Zusatzschienen 22 abgestützt. Die Zusatzschienen 22 sind an dem Wagen 10 abgestützt. Dadurch wird das in den Fig. 1 bis 5 dargestellte System, das jeweils einen Freiheitsgrad aufweist, zu einem System mit zwei Freiheitsgraden erweitert. Für die beiden möglichen Bewegungsrichtungen der Tilgermasse 6 können durch Wahl von unterschiedlichen Krümmungsradien der Schienen 8 und der Zusatzschienen 22 und/oder durch Kräfte der Rückstelleinrichtungen 15 unterschiedliche Schwingungstilgereigenfrequenzen eingestellt werden, falls dies erwünscht ist. Auch hier ist es möglich, einer Veränderung des Massenschwerpunkts der Tilgermasse 6 zu den Zusatzschienen 22 und damit auch zu den Schienen 8 in Schwerkraftrichtung vorzunehmen.

## Patentansprüche

1. Schwingungstilgeranordnung (1), insbesondere für hohe, schlanke Bauwerke, mit einer Tilgermasse (6), die einen Massenschwerpunkt aufweist und über eine Rad-Schiene-Anordnung (8, 11) an einer Basis (2) abgestützt ist, wobei die Tilgermasse (6) auf der Rad-Schiene-Anordnung (8, 11) aus einer Mittellage heraus verlagerbar ist und außerhalb der Mittellage Rückstellkräfte auf die Tilgermasse (6) wirken, wobei die Rückstellkräfte veränderbar sind, indem die Rad-Schiene-Anordnung (8, 11) eine gekrümmte Schiene (8) aufweist und die Rad-Schiene-Anordnung (8, 11) in Schwerkraftrichtung gegenüber dem Massenschwerpunkt verstellbar ausgebildet ist und/oder indem die Basis (2) eine Rückstelleinrichtung mit mehreren Rückstellelementen (15) aufweist, von denen mindestens eines lösbar mit der Tilgermasse (6) verbindbar ist, **dadurch gekennzeichnet, dass** die Rad-Schiene-Anordnung (8, 11) Rollen (11) aufweist, die mit der Schiene (8) zusammenwirken, wobei mindestens eine Rolle (11) eine Wirbelstrombremsanordnung aufweist.

2. Schwingungstilgeranordnung nach Anspruch 1 **dadurch gekennzeichnet, dass** die Rad-Schiene-Anordnung (8, 11) in Schwerkraftrichtung verteilt mehrere Befestigungspositionen (13) an der Tilgermasse (6) und mehrere Befestigungspositionen (9) an der Basis (2) aufweist.

3. Schwingungstilgeranordnung nach Anspruch 2, **dadurch gekennzeichnet, dass** Befestigungspositionen (13) an der Tilgermasse (6) und Befestigungspositionen (9) an der Basis (2) einander zugeordnet sind.

4. Schwingungstilgeranordnung nach einem der Ansprüche 1 bis 3, **dadurch gekennzeichnet, dass** die Rad-Schiene-Anordnung (8, 11) mit einem Wagen (10) verbunden ist, der die Tilgermasse (6) rahmenartig umgreift.

5. Schwingungstilgeranordnung nach einem der Ansprüche 1 bis 4, **dadurch gekennzeichnet, dass** die Rückstellelemente (15) jeweils als Federanordnung ausgebildet sind, wobei die Federanordnung in einer Neutralposition eine Befestigungseinrichtung (16) aufweist, die wahlweise an der Basis (2) oder an der Tilgermasse (6) festlegbar ist.

6. Schwingungstilgeranordnung nach Anspruch 1, **dadurch gekennzeichnet, dass** die Wirbelstrombremsanordnung eine Magnetanordnung (19) und mindestens einen elektrischen Leiter (18) aufweist, wobei die Magnetanordnung (19) und der elektrische Leiter (18) durch eine Drehung der Rolle (11) relativ zueinander bewegbar sind.

7. Schwingungstilgeranordnung nach Anspruch 6, **dadurch gekennzeichnet, dass** der elektrische Leiter (18) als Leiterplatte ausgebildet ist.

8. Schwingungstilgeranordnung nach einem der Ansprüche 1 oder 6 bis 7, **dadurch gekennzeichnet, dass** mindestens eine Rolle(11) als lastaufnehmende Rolle und mindestens eine Rolle als Führungsrolle (12) ausgebildet ist, die die Tilgermasse (6) gegenüber der Schiene (8) in eine Richtung quer zur Schwerkraftrichtung führt.

9. Schwingungstilgeranordnung nach einem der Ansprüche 1 oder 6 bis 8, **dadurch gekennzeichnet, dass** mindestens eine Rolle (11) durch einen Motor antreibbar ist.

10. Schwingungstilgeranordnung nach Anspruch 9, **dadurch gekennzeichnet, dass** der Motor mit einem Regler verbunden ist, der mit einer Sensoranordnung verbunden ist.

11. Schwingungstilgeranordnung nach einem der Ansprüche 1 bis 10, **dadurch gekennzeichnet, dass** die Rad-Schiene-Anordnung (8, 11) eine Relativbewegung zwischen der Tilgermasse (6) und der Basis (2) in eine erste Richtung ermöglicht und eine Zusatz-Rad-Schiene-Anordnung (22, 23) vorgesehen ist, die eine Relativbewegung zwischen der Rad-Schiene-Anordnung (8, 11) und der Tilgermasse (6) in eine zweite Richtung ermöglicht, die einen vorbestimmten Winkel größer 0° mit der ersten Richtung einschließt, insbesondere einen Winkel von 90°.

## Claims

1. Vibration absorber assembly (1), in particular for tall, slender constructions, comprising an absorption mass (6), which has a centre of mass and is supported at a base (2) via a wheel-rail assembly (8, 11), the absorption mass (6) being movable on the wheel-rail assembly (8, 11) out of a central position and restoring forces acting on the absorption mass (6) when not in the central position, the restoring forces being changeable by the wheel-rail assembly (8, 11) having a curved rail (8) and the wheel-rail assembly (8, 11) being adjustable in the direction of gravitational force with respect to the centre of mass and/or by the base (2) having a restoring device comprising a plurality of restoring elements (15), of which at least one can be releasably connected to the absorption mass (6), **characterised in that** the wheel-rail assembly (8, 11) has rollers (11) which interact with the rail (8), at least one roller (11) having an eddy current brake assembly.

2. Vibration absorber assembly according to claim 1, **characterised in that** the wheel-rail assembly (8, 11) has a plurality of fixing positions (13) on the absorption mass (6) and a plurality of fixing positions (9) on the base (2), which fixing positions are distributed in the direction of gravitational force.

3. Vibration absorber assembly according to claim 2, **characterised in that** fixing positions (13) on the absorption mass (6) and fixing positions (9) on the base (2) are assigned to each other.

4. Vibration absorber assembly according to any of claims 1 to 3, **characterised in that** the wheel-rail assembly (8, 11) is connected to a trolley, which surrounds the absorption mass (6) in a frame-like manner.

5. Vibration absorber assembly according to any of claims 1 to 4, **characterised in that** the restoring elements (15) are each designed as springs, the springs, when in a neutral position, having a fixing device (16) which can be fixed either to the base (2) or to the absorption mass (6).

6. Vibration absorber assembly according to claim 1, **characterised in that** the eddy current brake assembly has a magnet arrangement (19) and at least one electrical conductor (18), it being possible to move the magnet arrangement (19) and the electrical conductor (18) relative to each other by rotating the roller (11).

7. Vibration absorber assembly according to claim 6, **characterised in that** the electrical conductor (18) is designed as a circuit board.

8. Vibration absorber assembly according to any of claims 1 or 6 to 7, **characterised in that** at least one roller (11) is designed as a load-bearing roller and at least one roller is designed as a guide roller (12), which guides the absorption mass (6) relative to the rails (8) in a direction transverse to the direction of gravitational force.

9. Vibration absorber assembly according to any of claims 1 or 6 to 8, **characterised in that** at least one roller (11) can be driven by a motor.

10. Vibration absorber assembly according to claim 9, **characterised in that** the motor is connected to a controller, which is connected to a sensor arrangement.

11. Vibration absorber assembly according to any of claims 1 to 10, **characterised in that** the wheel-rail assembly (8, 11) makes possible a relative movement between the absorption mass (6) and the base (2) in a first direction, and an auxiliary wheel-rail assembly (22, 23) is provided which makes possible a relative movement between the wheel-rail assembly (8, 11) and the absorption mass (6) in a second direction, which encloses a predetermined angle of greater than 0° with the first direction, in particular an angle of 90°.

## Revendications

1. Dispositif amortisseur d'oscillations (1), en particulier pour des bâtiments minces, élevés, avec une masse d'amortissement (6), qui présente un centre de gravité de masse et est en appui par un agencement de roue et rail (8, 11) contre une base (2), la masse d'amortissement (6) pouvant être déplacée sur l'agencement de roue et rail (8, 11) depuis une position médiane et des forces de rappel agissant en dehors de la position médiane sur la masse d'amortissement (6), les forces de rappel étant modifiables en ce que l'agencement de roue et rail (8, 11) présente un rail courbé (8) et l'agencement de roue et rail (8, 11) étant réalisé de manière déplaçable dans le sens de la force de gravité par rapport au centre de gravité de masse et/ou en ce que la base (2) présente un dispositif de rappel avec plusieurs éléments de rappel (15), dont au moins un peut être relié de manière détachable à la masse d'amortissement (6), **caractérisé en ce que** l'agencement de roue et rail (8, 11) présente des rouleaux (11) qui coagissent avec le rail (8), au moins un rouleau (11) présentant un agencement de frein à courants de Foucault.

2. Dispositif amortisseur d'oscillations selon la revendication 1, **caractérisé en ce que** l'agencement de roue et rail (8, 11) présente plusieurs positions de fixation (13) sur la masse d'amortissement (6) et plusieurs positions de fixation (9) sur la base (2) réparties dans le sens de la force de gravité.

3. Dispositif amortisseur d'oscillations selon la revendication 2, **caractérisé en ce que** des positions de fixation (13) sur la masse d'amortissement (6) et des positions de fixation (9) sur la base (2) sont associées les unes aux autres.

4. Dispositif amortisseur d'oscillations selon l'une quelconque des revendications 1 à 3, **caractérisé en ce que** l'agencement de roue et rail (8, 11) est relié à un véhicule (10) qui entoure la masse d'amortissement (6) comme un cadre.

5. Dispositif amortisseur d'oscillations selon l'une quelconque des revendications 1 à 4, **caractérisé en ce que** les éléments de rappel (15) sont réalisés respectivement comme un agencement à ressort, l'agencement à ressort présentant dans une position neutre un dispositif de fixation (16) qui peut être fixé au choix sur la base (2) ou sur la masse d'amortissement (6).

6. Dispositif amortisseur d'oscillations selon la revendication 1, **caractérisé en ce que** l'agencement de frein à courants de Foucault présente un agencement à aimant (19) et au moins un conducteur électrique (18), l'agencement à aimant (19) et le conducteur électrique (18) étant mobiles par une rotation du rouleau (11) l'un par rapport à l'autre.

7. Dispositif amortisseur d'oscillations selon la revendication 6, **caractérisé en ce que** le conducteur électrique (18) est réalisé comme une carte de circuits imprimés.

8. Dispositif amortisseur d'oscillations selon l'une quelconque des revendications 1 ou 6 à 7, **caractérisé en ce qu'**au moins un rouleau (11) est réalisé comme un rouleau de réception de charge et au moins un rouleau est réalisé comme un rouleau de guidage (12) qui guide la masse d'amortissement (6) par rapport au rail (8) dans un sens transversal au sens de la force de gravité.

9. Dispositif amortisseur d'oscillations selon l'une quelconque des revendications 1 ou 6 à 8, **caractérisé en ce qu'**au moins un rouleau (11) peut être entraîné par un moteur.

10. Dispositif amortisseur d'oscillations selon la revendication 9, **caractérisé en ce que** le moteur est relié à un régulateur qui est relié à un agencement de capteur.

11. Dispositif amortisseur d'oscillations selon l'une quelconque des revendications 1 à 10, **caractérisé en ce que** l'agencement de roue et rail (8, 11) permet un mouvement relatif entre la masse d'amortissement (6) et la base (2) dans un premier sens et un agencement de roue et rail supplémentaire (22, 23) est prévu, lequel permet un mouvement relatif entre l'agencement de roue et rail (8, 11) et la masse d'amortissement (6) dans un second sens qui forme un angle prédéterminé supérieur à 0° avec le premier sens, en particulier un angle de 90°.
